# EUROPEAN PATENT SPECIFICATION

(11) **EP 3 693 187 B1**
(45) Date of publication and mention of the grant of the patent: **07.07.2021**
(21) Application number: 20154312.1
(22) Date of filing: 29.01.2020
(51) Int. Cl.: B60C 11/03, B60C 11/04, B60C 11/12

(54) **TIRE**
REIFEN
PNEUMATIQUE

(30) Priority: 05.02.2019 JP 2019019052
(43) Date of publication of application: 12.08.2020
(73) Proprietor: Sumitomo Rubber Industries, Ltd., Kobe-shi, Hyogo-ken 651-0072 (JP)
(72) Inventor: KANEMATSU, Yoshiaki, Kobe-shi,, Hyogo 651-0072, (JP); HORIGUCHI, Toshiki, Kobe-shi,, Hyogo 651-0072, (JP)
(74) Representative: Manitz Finsterwald Patent- und Rechtsanwaltspartnerschaft mbB

(56) References cited:
- EP-A1- 3 081 398
- EP-A1- 3 260 308
- EP-A1- 3 290 234
- JP-A- 2018 203 117

## Description

### BACKGROUND OF THE INVENTION

### Field of the Invention

The present invention relates to a tire for a vehicle which is used for an automobile or the like.

### Description of the Background Art

Japanese Patent No. 6321458 discloses a pneumatic tire that has first tilted grooves and first sipes in a first land portion. Each first sipe includes a first sipe portion to an n-th sipe portion which extend at different angles relative to the tire circumferential direction, and connect with each other sequentially from one end side of the first sipe.

A tire in accordance with the preamble of claim 1 is known from EP 3 290 234 A1.

It is important to improve drainage performance, and traction and braking performance on a wet road surface (hereinafter, collectively referred to simply as "wet performance"), and steering stability on a dry road surface (hereinafter, simply referred to as "steering stability") in a tire for a vehicle at a high level. However, for example, a problem arises that uneven wear originating from a connection portion between a lateral groove and a sipe is likely to occur at a crown land portion on which high contact pressure tends to constantly act during running.

The present invention is made in view of the aforementioned problem, and a main object of the present invention is to provide a tire that allows improvement of steering stability and wet performance while uneven wear is inhibited from occurring.

### SUMMARY OF THE INVENTION

The present invention is directed to a tire that includes a tread portion. The tread portion has land portions defined by main grooves. The land portions include a crown land portion disposed on a tire equator. The crown land portion includes: a first crown edge that extends in a tire circumferential direction on one side of the tire equator; a second crown edge that extends in the tire circumferential direction on the other side of the tire equator; a plurality of crown lateral grooves that extend from the first crown edge beyond the tire equator and terminate in the crown land portion; and crown sipes that include first sipe elements extending from the crown lateral grooves toward the second crown edge. The first sipe elements intersect the crown lateral grooves at an obtuse angle. The crown sipes further include second sipe elements that extend so as to be bent relative to the first sipe elements.

In another aspect of the present invention, the tread portion may have an asymmetric pattern for which a mounting direction to a vehicle is designated, and, in the mounting direction, when the tire has been mounted to the vehicle, the first crown edge may be disposed on an outer side of the vehicle and the second crown edge may be disposed on an inner side of the vehicle.

In another aspect of the present invention, the second sipe elements may intersect the first sipe elements at an obtuse angle.

In another aspect of the present invention, an absolute value |α-β| of a difference between an angle α at which the crown lateral grooves and the first sipe elements intersect each other and an angle β at which the first sipe elements and the second sipe elements intersect each other may not be greater than 30 degrees.

In another aspect of the present invention, the first sipe elements and the crown lateral grooves may intersect each other at an angle that is greater than 90 degrees and not greater than 145 degrees.

In another aspect of the present invention, a length of each crown lateral groove may be 51% to 70% of a width, in a tire axial direction, of the crown land portion.

In another aspect of the present invention, the land portions may include a first middle land portion that is adjacent to the first crown edge side of the crown land portion across a first crown main groove. The first middle land portion may include first middle sipes that extend from the first crown main groove and terminate in the first middle land portion, and second middle sipes each extending from the first crown main groove and having a length, in a tire axial direction, which is less than each first middle sipe.

In another aspect of the present invention, the first middle sipes and the second middle sipes may be tilted relative to the tire axial direction in the same direction.

In another aspect of the present invention, the first middle land portion may be defined between the first crown main groove and a first shoulder main groove disposed outward of the first crown main groove in the tire axial direction. The first middle land portion may have a plurality of first middle lateral grooves that extend from the first shoulder main groove and terminate in the first middle land portion.

In another aspect of the present invention, each first middle lateral groove may have a groove width greater than each crown lateral groove.

In another aspect of the present invention, the land portions may include a second middle land portion that is adjacent to the second crown edge side of the crown land portion across a second crown main groove. The second middle land portion may include a plurality of third middle sipes that transversely extend fully across the second middle land portion. The second middle land portion may include a plurality of second middle lateral grooves that extend outward from the second crown main groove in a tire axial direction and terminate in the second middle land portion.

In another aspect of the present invention, the third middle sipes and the second middle lateral grooves may be tilted relative to the tire axial direction in the same direction.

In another aspect of the present invention, each second middle lateral groove may have a groove width greater than each crown lateral groove.

In another aspect of the present invention, each of the main grooves may have a groove width of not less than 3.0 mm. The total number of the main grooves disposed in the thread portion may be four. The number of the land portions that are defined in the tread portion may be five.

The tire of the present invention includes the crown lateral grooves and the crown sipes in the crown land portion, and, therefore, steering stability and wet performance can be improved.

The first sipe elements of the crown sipes intersect the crown lateral grooves at an obtuse angle. Therefore, stiffness is inhibited from being locally reduced at the connection portions between the crown lateral grooves and the crown sipes, so that uneven wear originating from the connection portion is inhibited from occurring in the crown land portion.

### BRIEF DESCRIPTION OF THE DRAWINGS

FIG. 1 is a development of a tread portion of a tire according to one embodiment of the present invention;
FIG. 2 is a cross-sectional view taken along a line II-II in FIG. 1;
FIG. 3 is a partially enlarged view of a crown land portion;
FIG. 4 is a cross-sectional view taken along a line IV-IV in FIG. 3;
FIG. 5 is a partially enlarged view of a first middle land portion;
FIG. 6 is a partially enlarged view of a second middle land portion;
FIG. 7 is a cross-sectional view taken along a line VII-VII in FIG. 6; and
FIG. 8 is a cross-sectional view taken along a line VIII-VIII in FIG. 6.

### DESCRIPTION OF THE PREFERRED EMBODIMENTS

One embodiment of the present invention will be described below with reference to the drawings.

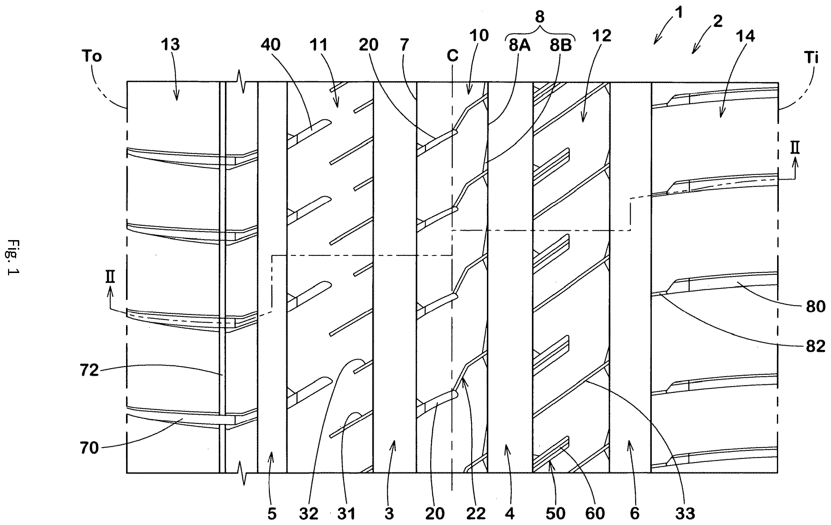

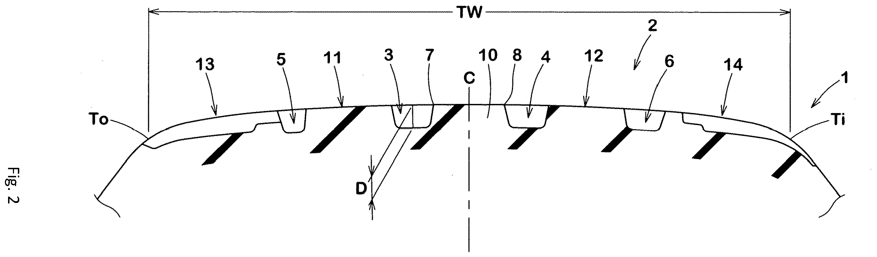

FIG. 1 is a development of a tread portion 2 of a tire 1 according to one embodiment of the present invention, and FIG. 2 is a cross-sectional view taken along a line II-II in FIG. 1. As shown in FIGS. 1 and 2, the tire 1 of the present embodiment is preferably configured as a pneumatic tire for a passenger car. More preferably, the tread portion 2 has an asymmetric pattern about a tire equator C.

In the tread portion 2, land portions 10 to 14 are formed so as to be defined by a plurality of main grooves 3 to 6. The main grooves 3 to 6 are, for example, grooves that continuously extend in the tire circumferential direction and can make a sufficient contribution to drainage performance.

For example, a groove width of each of the main grooves 3 to 6 is not less than 5.0 mm, preferably not less than 6.0 mm, and more preferably not less than 8.0 mm. The main grooves 3 to 6 may have the same groove width or may have groove widths different from each other. In the present embodiment, in FIG. 1, the three main grooves on the right side have groove widths of not less than about 13.0 mm, and the one main groove on the left side has a groove width less than the groove widths of the three main grooves, for example, has a groove width of about 10.0 mm. In the present embodiment, the five land portions 10 to 14 are formed in the tread portion 2 by the main grooves 3 to 6 (four main grooves in total) being disposed.

In the description herein and claims, unless otherwise specified, dimensions of components of the tire 1, and the like are represented as values measured in a "normal state" in which the tire 1 is mounted on a normal rim and is inflated with air to a normal internal pressure, and no load is applied to the tire 1.

The "normal rim" represents a rim that is defined by a standard, in a standard system including the standard with which the tire 1 complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire 1 complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

### [Crown land portion]

The land portions include a crown land portion 10. The crown land portion 10 is disposed on the tire equator C, and a heavy load acts on the crown land portion 10 not only in straight running but also in turning.

The crown land portion 10 has a contact surface. The contact surface is defined by a first crown edge 7 that extends in the tire circumferential direction on one side of the tire equator C and a second crown edge 8 that extends in the tire circumferential direction on the other side of the tire equator C. In the present embodiment, the tire equator C is positioned at the center in the tire axial direction between the first crown edge 7 and the second crown edge 8.

The first crown edge 7 is defined by the first crown main groove 3 and the second crown edge 8 is defined by the second crown main groove 4. It is to be understood that the first crown edge 7 and the second crown edge 8 do not necessarily have sharp corners and merely specify "end edges" of the contact surface of the crown land portion 10.

The first crown edge 7 extends, for example, linearly along the tire circumferential direction. The second crown edge 8 includes, for example, portions 8A that extend linearly along the tire circumferential direction, and recesses 8B that are recessed toward the center in the width direction of the crown land portion 10. Each recess 8B is, for example, a lateral-V-shaped when the tread is seen in a planar view. However, the first crown edge 7 and the second crown edge 8 are not limited thereto.

The crown land portion 10 includes a plurality of crown lateral grooves 20 and a plurality of crown sipes 22.

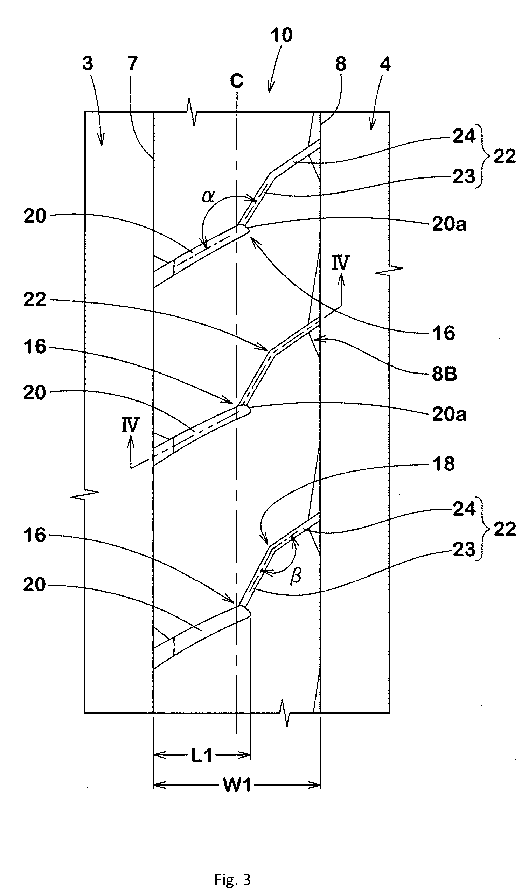

FIG. 3 is a partially enlarged view of the crown land portion 10 shown in FIG. 1. As shown in FIG. 3, each crown lateral groove 20 extends from the first crown edge 7 beyond the tire equator C and terminates in the crown land portion 10. That is, each crown lateral groove 20 does not extend fully across the crown land portion 10, and has one end 20a on the crown land portion 10. Therefore, the crown lateral grooves 20 inhibit reduction of stiffness of the crown land portion 10, and consequently contribute to improvement of steering stability provided by the tire 1. Meanwhile, the crown lateral grooves 20 extend across the tire equator C in the crown land portion 10 on which a high contact pressure acts. Therefore, excellent drainage performance can be provided by utilizing this structure.

Each crown sipe 22 includes a first sipe element 23 that extends from a corresponding crown lateral groove 20 toward the second crown edge 8. That is, one end of the crown sipe 22 is connected to the crown lateral groove 20. In the description herein, the "sipe" such as the crown sipe 22 represents a narrow cut having a width of less than 1.5 mm and preferably having a width of not greater than 1.0 mm. More preferably, the sipe has such a cut width that the opposing sipe wall surfaces at least partially contact with each other when the tire contacts with the ground, to improve apparent stiffness of the land portion. The "groove" is a cut having a width greater than the sipe, and has a groove width of not less than 1.5 mm.

The crown sipes 22 exhibit an edge effect of sweeping a road surface by the edge that appears on the contact surface and a so-called wiping effect of wiping a water film on the road surface by the edge while inhibiting reduction of stiffness of the crown land portion 10. Furthermore, the crown sipes 22 are expected to exhibit a drainage effect of sending, toward the second crown edge 8, water to be drained from the crown lateral grooves 20 while a space between the sipe walls slightly opens.

As described above, the crown land portion 10 of the present embodiment allows the tire 1 to improve steering stability and wet performance, in particular, wet braking performance.

In the present embodiment, the first sipe element 23 of the crown sipe 22 intersects the crown lateral groove 20 at an obtuse angle (that is, an angle α that is greater than 90 degrees and less than 180 degrees). The angle α is obtained as an intersection angle between the groove center line of the crown lateral groove 20 and the center line of the first sipe element 23.

It has been found as a result of various experiments that, in the crown land portion 10 on which a high contact pressure tends to constantly act during running, a connection portion 16 at which the crown lateral groove 20 and the crown sipe 22 connect with each other is a weak point in wear, and uneven wear originating from the connection portion 16 is likely to occur. Such uneven wear is developed into crown wear to reduce steering stability by further running.

Meanwhile, it has been found that, when the crown lateral grooves 20 and the crown sipes 22 (first sipe elements 23) intersect each other at an obtuse angle at the connection portion 16, stiffness can be inhibited from being locally reduced at the connection portion 16, so that uneven wear originating from the connection portion 16 can be reduced to be very small. Therefore, the tire 1 of the present embodiment can allow improvement of steering stability and wet performance while reducing uneven wear at the connection portion 16 between the crown lateral groove 20 and the crown sipe 22 in the crown land portion 10.

The angle α at which the first sipe element 23 intersects the crown lateral groove 20 is greater than 90 degrees. The angle α is preferably not less than 100 degrees, more preferably not less than 110 degrees, and even more preferably not less than 120 degrees, and preferably not greater than 145 degrees. Thus, uneven wear at the connection portion 16 between the crown lateral groove 20 and the crown sipe 22 can be more effectively reduced.

In a preferable mode, a mounting direction to a vehicle is designated for the tread portion 2 such that the first crown edge 7 is disposed on the outer side of the vehicle and the second crown edge 8 is disposed on the inner side of the vehicle when the tire is mounted to the vehicle. The mounting direction is indicated on a sidewall portion (not shown) of the tire 1. In such a manner, since the crown lateral grooves 20 are disposed on the outer side of the vehicle in the crown land portion 10, drainage of water toward the outside of the vehicle is facilitated. Since the crown sipes 22 are disposed on the inner side of the vehicle in the crown land portion 10, stiffness of the crown land portion 10 on the inner side of the vehicle can be maintained relatively high. It can be understood that the tire 1 having such a structure can exhibit excellent steering stability when the tire 1 is mounted to the vehicle at a negative camber at which a high contact pressure acts on the inner side of the vehicle in the tread portion 2.

For example, the crown sipe 22 connects with the crown lateral groove 20 on one end 20a side. In a preferable mode, the crown sipe 22 connects with the crown lateral groove 20 in a portion closer to the second crown edge 8 than the tire equator C is. Therefore, the connection portion 16 between the crown lateral groove 20 and the crown sipe 22 is deviated from the tire equator C toward the second crown edge 8. This reduces contact pressure that acts on the connection portion 16 and serves to further inhibit occurrence of uneven wear at the connection portion 16.

For example, each crown lateral groove 20 is preferably tilted relative to the tire axial direction but is not particularly limited thereto. In order to improve drainage performance while deterioration of steering stability is minimized, the crown lateral groove 20 is preferably tilted relative to the tire axial direction, for example, at an angle of 10 to 50 degrees and more preferably at an angle of 20 to 40 degrees.

For example, each crown lateral groove 20 preferably extends linearly or extends so as to be arc-shaped but is not particularly limited thereto. In such a manner, drainage performance at the crown lateral grooves 20 is improved. In order to further improve drainage performance, when the crown lateral groove 20 is curved so as to be arc-shaped, the curvature radius of the arc is preferably not less than 100 mm.

Since the crown lateral grooves 20 are disposed in the crown land portion 10 at which contact pressure is high, the crown lateral grooves 20 exert an influence on drainage performance and steering stability. Therefore, in order to further improve steering stability and wet performance, the groove width of the crown lateral groove 20 is preferably not less than 2.0 mm, more preferably not less than 2.5 mm, and even more preferably not less than 3.0 mm, and preferably not greater than 10.0 mm, more preferably not greater than 8.0 mm, and even more preferably not greater than 6.0 mm. The groove width of the crown lateral groove 20 is defined as an average groove width obtained by an opening area, at the contact surface, of the crown lateral groove 20 being divided by the length of the groove center line, and the opening area does not include a chamfered portion such as a so-called diamond cut which is disposed at the end portion, in the length direction, of the groove.

For example, a length L1, in the tire axial direction, of the crown lateral groove 20 is, but is not particularly limited to, not less than 51% of a width W1, in the tire axial direction, of the crown land portion 10 and more preferably not less than 55% thereof, and preferably not greater than 70% thereof and more preferably not greater than 65% thereof. Thus, the crown lateral grooves 20 can sufficiently provide drainage performance without reducing stiffness of the crown land portion 10.

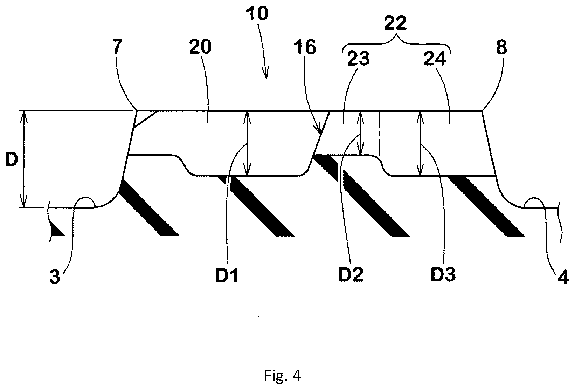

FIG. 4 shows a cross-section taken along a line IV-IV in FIG. 3. As shown in FIG. 4, for example, a groove depth D1 of the crown lateral groove 20 is preferably in a range of 50% to 90% of the greatest groove depth D of the first crown main groove 3 at the deepest position. However, the present invention is not particularly limited thereto. Thus, drainage performance is sufficiently obtained while reduction of stiffness of the crown land portion 10 is inhibited. The groove depth D1 of the crown lateral groove 20 may be constant. However, as in the present embodiment, the crown lateral groove 20 preferably has a small groove depth on the first crown main groove 3 side in order to further inhibit reduction of stiffness of the crown land portion 10.

For example, the greatest groove depth D of the first crown main groove 3 is, but is not particularly limited to, not less than 6.0 mm, preferably not less than 7.0 mm, and more preferably not less than 8.0 mm. For example, the other main grooves 4 to 6 have similar depths.

As shown in FIG. 3, in the crown sipe 22, the first sipe element 23 may be tilted relative to the tire axial direction. Thus, the first sipe element 23 can exhibit an edge effect in the tire axial direction.

In a preferable mode, the first sipe element 23 is preferably tilted in the same direction as the crown lateral groove 20. Thus, drainage performance at the crown land portion 10 is further improved. In the present embodiment, the first sipe element 23 and the crown lateral groove 20 are each tilted in the upper right direction.

In the present embodiment, the first sipe element 23 linearly extends. In another mode, the first sipe element 23 may be, for example, curved so as to be arc-shaped. In this case, the edge length of the crown sipe 22 is increased to further improve an edge effect.

In a preferable mode, the crown sipes 22 may further include second sipe elements 24. The second sipe elements 24 are disposed on the second crown edge 8 side so as to be closer to the second crown edge 8 than the first sipe elements 23 are. The second sipe elements 24 extend, for example, so as to be bent relative to the first sipe elements 23. By the second sipe elements 24 being disposed, the crown sipes 22 can exhibit the edge effect and wiping effect in multiple directions to further improve wet performance of the tire 1.

The second sipe elements 24 are preferably tilted relative to the tire axial direction in the same direction as the crown lateral grooves 20. In such a manner, the crown lateral grooves 20, the first sipe elements 23 of the crown sipes 22, and the second sipe elements 24 of the crown sipes 22 are tilted relative to the tire axial direction in the same direction to further improve drainage performance.

For example, each second sipe element 24 preferably intersects the first sipe element 23 at an obtuse angle (that is, an angle β that is greater than 90 degrees and less than 180 degrees). Thus, a low-stiffness portion can be inhibited from being locally formed at a connection portion 18 between the first sipe element 23 and the second sipe element 24, and occurrence of uneven wear at the connection portion 18 can be inhibited.

In a preferable mode, the angle β at which the first sipe element 23 intersects the second sipe element 24 is greater than the angle α at which the first sipe element 23 intersects the crown lateral groove 20 (α<β). Thus, the above-described effect can be more effectively exhibited. For example, the angle β may be 120 to 160 degrees.

In another preferable mode, an absolute value |α-β| of difference between the angles α and β is restricted so as to be within a predetermined range. Thus, difference in stiffness between the two connection portions 16 and 18 in each of which stiffness tends to be low, can be reduced, and concentration of wear on one of the connection portion 16 or 18 can be effectively inhibited. For example, the absolute value |α-β| of the difference between the angles is preferably not greater than 30 degrees and more preferably not greater than 20 degrees. It is to be understood that the difference between the angles may be specified for any of three modes of α<β, α>β, and α=β

As shown in FIG. 4, in a preferable mode, a depth D2 of the first sipe element 23 of the crown sipe 22 is less than the groove depth D1 of the crown lateral groove 20 at the connection portion 16. In such a manner, stiffness can be more effectively inhibited from being locally reduced at the connection portion 16 between the crown lateral groove 20 and the crown sipe 22, so that uneven wear originating from the connection portion 16 can be inhibited from occurring. When the first sipe element 23 has a small depth, opening of the crown sipe 22 at the connection portion 16 can be restricted in driving and braking by the tire 1, and steering stability can be improved.

In a preferable mode, in the crown sipe 22, a depth D3 of the second sipe element 24 is greater than the depth D2 of the first sipe element 23. When the second sipe element 24 having such a structure leaves a contact surface, the second sipe element 24 is more likely to be opened than the first sipe element 23. Therefore, the second sipe element 24 can exhibit an effect of drainage toward the second crown main groove 4 to improve wet performance of the tire 1. The depth D2 of the first sipe element 23 is preferably about 20 to 80% of the depth D3 of the second sipe element 24.

As shown in FIG. 3, for example, the crown sipe 22 may be connected to the second crown edge 8. In a preferable mode, the second sipe element 24 is connected to the second crown edge 8. In a particularly preferable mode, the second sipe element 24 is connected to the recess 8B of the second crown edge 8. In such a manner, drainage performance by the crown sipes 22 can be further improved.

In another mode of the crown sipes 22, third sipe elements may be connected to the second crown edge 8 side of the second sipe element 24. In this case, the third sipe elements preferably intersect the second sipe elements 24 at an obtuse angle.

In the present embodiment, the crown land portion 10 has the crown lateral grooves 20 only as grooves. Thus, preferably, other than the crown lateral grooves 20, no grooves and sipes are connected to the first crown edge 7. Thus, reduction of stiffness in the crown land portion 10 is inhibited and steering stability at dry road surfaces is improved. In the present embodiment, preferably, other than the crown sipes 22, no grooves and sipes are connected to the second crown edge 8 of the crown land portion 10.

### [First middle land portion]

Returning to FIG. 1, the tread portion 2 may further include a first middle land portion 11 as the land portion. The first middle land portion 11 is adjacent to the first crown edge 7 side of the crown land portion 10 across the first crown main groove 3. The first middle land portion 11 is defined between the first crown main groove 3 and the first shoulder main groove 5 that is disposed outward of the first crown main groove 3 in the tire axial direction.

The first middle land portion 11 includes, for example, first middle sipes 31 and second middle sipes 32.

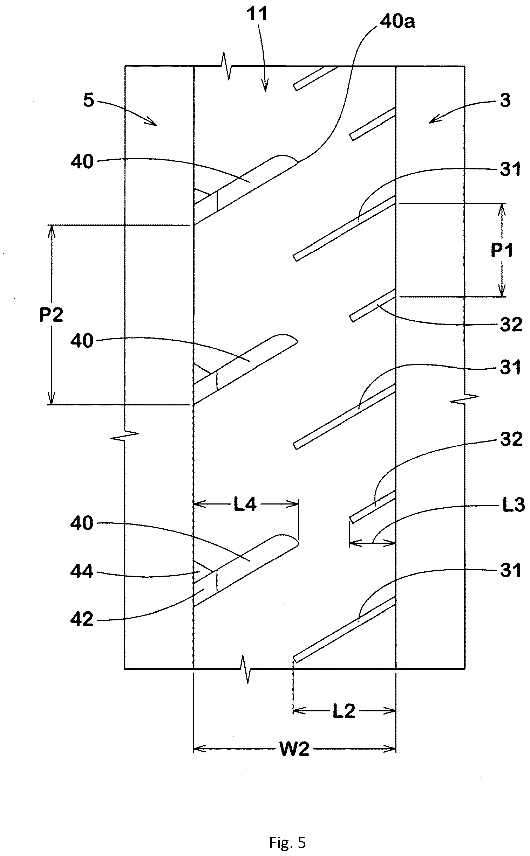

FIG. 5 is an enlarged view of a main portion of the first middle land portion 11. As shown in FIG. 5, the first middle sipes 31 and the second middle sipes 32 are each a semi-open sipe that extends from the first crown main groove 3 and terminates in the first middle land portion 11. A length L3, in the tire axial direction, of the second middle sipe 32 is less than a length L2, in the tire axial direction, of the first middle sipe 31. The first and the second middle sipes 31 and 32 having such structures exhibit an edge effect to improve wet performance of the tire 1 in the first middle land portion 11 while reduction of stiffness of the first middle land portion 11 is inhibited.

The first middle sipes 31 and the second middle sipes 32 preferably alternate in the tire circumferential direction. Each of the first middle sipes 31 and the second middle sipes 32 preferably extends linearly.

In order to exhibit excellent edge effect while reduction of stiffness of the first middle land portion 11 is inhibited, the length L2, in the tire axial direction, of the first middle sipe 31 is, for example, 30% to 70% of a width W2, in the tire axial direction, of the first middle land portion 11 and is preferably 40% to 60% thereof. In the present embodiment, the length L2 is 50% of the width W2. Similarly, the length L3, in the tire axial direction, of the second middle sipe 32 is, for example, 30% to 70% of the length L2, in the tire axial direction, of the first middle sipe 31 and is preferably 40% to 60% thereof.

In a preferable mode, the first middle sipes 31 and the second middle sipes 32 may be alternately disposed in the tire circumferential direction at a pitch PI that is 45 to 55% of one pitch of the crown lateral grooves 20. When semi-open sipes are densely disposed on the first crown main groove 3 side of the first middle land portion 11, excellent edge effect and quietness during running can be provided while lateral stiffness of the first middle land portion 11 is maintained. One pitch of the crown lateral grooves 20 is an interval between the crown lateral grooves 20 disposed in the tire circumferential direction. When the crown lateral grooves 20 are disposed at variable pitches, the one pitch is a value (average interval) obtained by a tire circumferential length at the first crown edge 7 being divided by the total number of the crown lateral grooves 20 for convenience sake. The above-described definition is also applied to pitches of other lateral grooves and sipes described below.

The first middle sipes 31 and the second middle sipes 32 may be tilted relative to the tire axial direction. In a preferable mode, the first middle sipes 31 and the second middle sipes 32 are tilted in the same direction. In the present embodiment, the first middle sipes 31 and the second middle sipes 32 are tilted relative to the tire axial direction in the same direction as the crown lateral grooves 20. In a particularly preferable mode, the first middle sipes 31 and the second middle sipes 32 are disposed parallel to each other. Such a sipe layout serves to prevent a weak point in wear from being generated in the first middle land portion 11.

In a preferable mode, the first middle land portion 11 has a plurality of first middle lateral grooves 40 formed therein. Each first middle lateral groove 40 extends from the first shoulder main groove 5 and terminates in the first middle land portion 11. That is, each first middle lateral groove 40 does not extend fully across the first middle land portion 11 and has one end 40a on the first middle land portion 11. The first middle lateral groove 40 extends, for example, linearly so as to exhibit preferable drainage performance. The first middle lateral groove 40 inhibits reduction of stiffness of the first middle land portion 11 and consequently improves steering stability provided by the tire 1. Meanwhile, the other end of the first middle lateral groove 40 is connected to the first shoulder main groove 5, and, therefore, excellent drainage performance is provided so that wet performance of the tire 1 can be improved.

For example, a length L4, in the tire axial direction, of the first middle lateral groove 40 is, but is not particularly limited to, not less than 30% of the width W2, in the tire axial direction, of the first middle land portion 11 and more preferably not less than 40% thereof, and preferably not greater than 70% thereof and more preferably not greater than 60% thereof. In the present embodiment, the length L4 of the first middle lateral groove 40 is 50% of the width W2 of the first middle land portion 11. The first middle lateral groove 40 having such a structure can sufficiently provide drainage performance without reducing stiffness of the first middle land portion 11.

In a preferable mode, the first middle lateral grooves 40 are disposed in the tire circumferential direction at a pitch P2 that is 95% to 105% of one pitch of the crown lateral grooves. Thus, in the first middle land portion 11, drainage performance can be sufficiently obtained.

The first middle lateral grooves 40 do not intersect the first middle sipes 31 and the second middle sipes 32. Thus, the first middle land portion 11 does not have connection portions between lateral grooves and sipes at which stiffness is locally reduced, so that occurrence of uneven wear is inhibited.

In a preferable mode, the first middle lateral grooves 40 are tiled in the same direction as the first middle sipes 31. In a particularly preferable mode, difference between an angle at which the first middle lateral grooves 40 are tilted relative to the tire axial direction and an angle at which the first middle sipes 31 are tiled relative to the tire axial direction is not greater than 10 degrees. This prevents a weak point in wear from being generated in the first middle land portion 11.

The groove width of the first middle lateral groove 40 is preferably not less than 2.5 mm, more preferably not less than 3.0 mm, and preferably not greater than 10.0 mm, more preferably not greater than 8.0 mm, and even more preferably not greater than 6.0 mm. In a preferable mode, the first middle lateral groove 40 has a groove width that is greater than the crown lateral groove 20. The groove width of the first middle lateral groove 40 is defined as an average groove width obtained by an opening area, at a contact surface, of the first middle lateral groove 40 being divided by the length of the groove center line, and the opening area does not include so-called chamfered portion and diamond cut, and the like disposed at the end portion, in the length direction, of the groove.

For example, the groove depth of the first middle lateral groove 40 is, but is not particularly limited to, preferably in a range of 50% to 90% of the greatest groove depth D (shown in FIG. 2) of the first crown main groove 3 at the deepest position. Thus, drainage performance can be sufficiently obtained while reduction of stiffness of the first middle land portion 11 is inhibited.

The first middle lateral grooves 40 may have a constant groove depth. However, in order to further inhibit reduction of stiffness of the first middle land portion 11, shallow bottom portions 42 having a small depth are preferably provided on the first shoulder main groove 5 side. Acute angle portions between the first middle lateral grooves 40 and the first shoulder main groove 5 are preferably formed as chamfered portions 44 (so-called diamond cut) that are tilted inward in the tire radial direction toward the end portion.

In the present embodiment, only the first middle lateral grooves 40 are disposed as grooves at the edge on the outer side, in the tire axial direction, of the first middle land portion 11. Thus, preferably, other than the first middle lateral grooves 40, no grooves and sipes are connected to the edge on the outer side, in the tire axial direction, of the first middle land portion 11. Thus, reduction of stiffness of the first middle land portion 11 is inhibited and steering stability on a dry road surface is improved. Similarly, preferably other than the first middle sipes 31 and the second middle sipes 32, no grooves and sipes are connected to the edge on the inner side, in the tire axial direction, of the first middle land portion 11.

### [Second middle land portion]

Returning to FIG. 1, the tread portion 2 may further include the second middle land portion 12 as the land portion. The second middle land portion 12 is adjacent to the second crown edge 8 side of the crown land portion 10 across the second crown main groove 4. The second middle land portion 12 is defined between the second crown main groove 4 and the second shoulder main groove 6 that is disposed outward of the second crown main groove 4 in the tire axial direction.

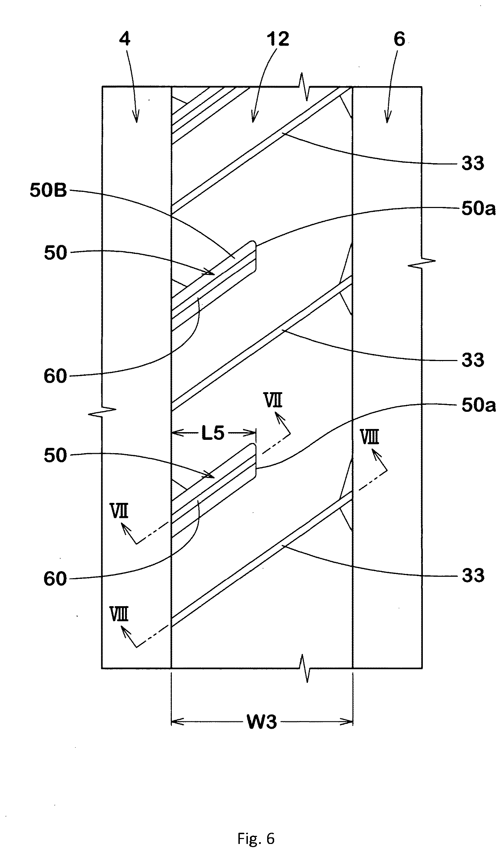

As shown in FIG. 6, the second middle land portion 12 includes, for example, a plurality of second middle lateral grooves 50 and a plurality of third middle sipes 33. In a preferable mode, the second middle lateral grooves 50 and the third middle sipes 33 may alternate in the tire circumferential direction.

Each second middle lateral groove 50 extends outward from the second crown main groove 4 in the tire axial direction and has one end 50a at which the second middle lateral groove 50 terminates in the second middle land portion 12. The second middle lateral grooves 50 can allow drainage of water under the second middle land portion 12 through the second crown main groove 4 to provide excellent drainage performance. The second middle lateral grooves 50 do not extend fully across the second middle land portion 12, and, therefore, reduction of stiffness of the second middle land portion 12 is inhibited and steering stability provided by the tire 1 is improved. In this viewpoint, a length L5, in the tire axial direction, of the second middle lateral groove 50 is preferably 40% to 60% of a width W3, in the tire axial direction, of the second middle land portion 12. In the present embodiment, the length L5 is 50% of the width W3.

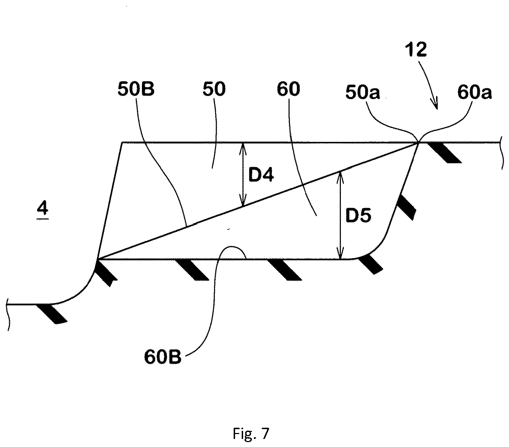

FIG. 7 is a cross-sectional view taken along a line VII-VII in FIG. 6. As shown in FIG. 7, the second middle lateral groove 50 has a groove bottom surface 50B. The groove bottom surface 50B is formed such that a groove depth D4 of the second middle lateral groove 50 is gradually decreased from the second crown main groove 4 toward the one end 50a of the second middle lateral groove 50. In the present embodiment, the groove depth D4 of the second middle lateral groove 50 is 0 at the one end 50a. The groove bottom surface 50B is formed such that the groove depth of the second middle lateral groove 50 is continuously decreased gradually from the second crown main groove 4 toward the one end 50a. The second middle lateral grooves 50 having such a structure can exhibit drainage performance while reduction of stiffness of the second middle land portion 12 is more effectively inhibited.

As shown in FIG. 6, in a preferable mode, a groove bottom sipe 60 is formed in the groove bottom surface 50B of each second middle lateral groove 50 so as to extend inward from the groove bottom surface 50B in the tire radial direction. The groove bottom sipe 60 having such a structure can allow the second middle lateral groove 50 to be easily opened during, for example, kicking-out of the second middle land portion 12 from a road surface, and further allow improvement of drainage performance while reduction of stiffness of the second middle land portion 12 is inhibited.

The groove bottom sipe 60 has, for example, substantially the same length as the second middle lateral groove 50. For example, the groove bottom sipe 60 is formed at the center position, in the groove width direction, of the second middle lateral groove 50. However, the groove bottom sipe 60 may be disposed closer to one of the sides in the groove width direction.

As shown in FIG. 7, a sipe depth D5 of the groove bottom sipe 60 from the groove bottom surface 50B to a sipe bottom surface 60B is gradually increased outward from the second crown main groove 4 in the tire axial direction in contrast to the groove depth D4 of the second middle lateral groove 50. In the present embodiment, the groove bottom sipe 60 has the sipe depth that is continuously increased gradually from the second crown main groove 4 to an end 60a of the groove bottom sipe 60. When the groove bottom sipes 60 having such a structure are combined with the second middle lateral grooves 50, drainage performance of the second middle lateral grooves 50 is further improved.

As shown in FIG. 6, each third middle sipe 33 transversely extends fully across the second middle land portion 12. The third middle sipes 33 allow the edge effect to be obtained over the entire width of the second middle land portion 12 and allow wet performance to be improved.

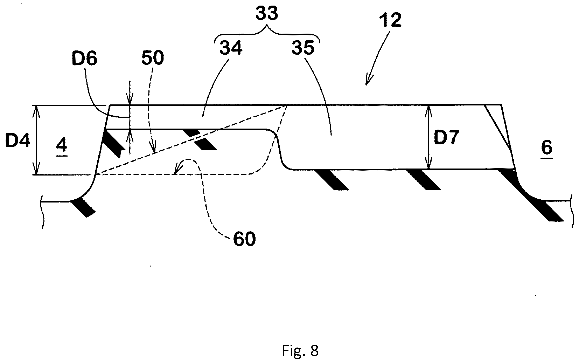

FIG. 8 is a cross-sectional view taken along a line VIII-VIII in FIG. 6. As shown in FIG. 8, each third middle sipe 33 includes an inner side portion 34 that is connected to the second crown main groove 4 side and an outer side portion 35 that is connected to the second shoulder main groove 6 side.

The sipe depth of the inner side portion 34 is less than the sipe depth of the outer side portion 35. For example, the inner side portion 34 is preferably formed such that the length thereof is in a range of 40% to 60% of the length, in the tire axial direction, of the third middle sipe 33. The inner side portion 34 of the third middle sipe 33 overlaps the second middle lateral groove 50 as viewed in the tire circumferential direction. Therefore, when the inner side portion 34 of the third middle sipe 33 is formed to be shallow, reduction of stiffness on the inner side, in the tire axial direction, of the second middle land portion 12 can be inhibited, and steering stability provided by the tire 1 can be improved. In order to further improve such an effect, for example, a depth D6 of the inner side portion 34 of the third middle sipe 33 is preferably about 10 to 40% of the greatest groove depth D4 of the second middle lateral groove 50.

In order to improve drainage performance on the outer side, in the tire axial direction, of the second middle land portion 12, for example, a sipe depth D7 of the outer side portion 35 of the third middle sipe 33 is preferably about 60 to 105% of the greatest groove depth D4 of the second middle lateral groove 50.

As shown in FIG. 6, in a preferable mode, the third middle sipes 33 and the second middle lateral grooves 50 are tilted relative to the tire axial direction in the same direction. Furthermore, in the present embodiment, the third middle sipes 33 and the second middle lateral grooves 50 are tilted in the same direction as the crown lateral grooves 20.

An angle of each of the third middle sipe 33 and the second middle lateral groove 50 relative to the tire axial direction is preferably greater than an angle of the first middle lateral groove 40 relative to the tire axial direction. Thus, excellent drainage performance can be obtained in the second middle land portion 12. Particularly preferably, the angle of each of the third middle sipe 33 and the second middle lateral groove 50 relative to the tire axial direction is greater than the angle of the first middle lateral groove 40 relative to the tire axial direction such that a difference between both the angles is not greater than 10 degrees. Thus, significant reduction of lateral stiffness of the second middle land portion 12 can be inhibited, so that high steering stability can be obtained.

In a preferable mode, the second middle lateral groove 50 has a groove width greater than the crown lateral groove. Thus, excellent drainage performance can be obtained in the second middle land portion 12. The groove width of the second middle lateral groove 50 is defined as an average groove width obtained by an opening area, at the contact surface, of the second middle lateral groove 50 being divided by the length of the groove center line, and the opening area does not include a chamfered portion such as a so-called diamond cut which is disposed at the end portion, in the length direction, of the groove.

The third middle sipes 33 are disposed in the tire circumferential direction at a pitch that is 95 to 105% of one pitch of the crown lateral grooves 20. Similarly, the second middle lateral grooves 50 are also disposed in the tire circumferential direction at a pitch that is 95 to 105% of one pitch of the crown lateral grooves 20. The third middle sipes 33 and the second middle lateral grooves 50 are alternately disposed in the tire circumferential direction at a pitch that is about 45 to 55% of one pitch of the crown lateral grooves 20.

As shown in FIG. 1, the tread portion 2 may further include the first shoulder land portion 13 and the second shoulder land portion 14 as the land portions.

The first shoulder land portion 13 is defined between the first shoulder main groove 5 and a first tread end To. The second shoulder land portion 14 is defined between the second shoulder main groove 6 and a second tread end Ti.

The first tread end To and the second tread end Ti represent the outermost positions on both sides, in the tire axial direction, of the contact surface of the tread portion 2 in the tire 1 in a normal load state.

In the description herein, the "normal load state" represents a state in which the tire 1 is mounted on a normal rim at a normal internal pressure, and a normal load is applied to the tire 1 when the camber angle is zero.

The "normal load" represents a load that is defined by a standard, in a standard system including the standard with which the tire 1 complies, for each tire, and is "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

The first shoulder land portion 13 has a plurality of first shoulder lateral grooves 70 formed therein. Each first shoulder lateral groove 70 transversely extends fully across the first shoulder land portion 13. Thus, the first shoulder land portion 13 is formed as block rows. For example, the first shoulder land portion 13 may have a longitudinal narrow groove 72 having a groove width less than the main groove, preferably having a groove width of not greater than 2.5 mm.

The second shoulder land portion 14 has a plurality of second shoulder lateral grooves 80 formed therein. The second shoulder lateral grooves 80 connect with the second tread end Ti, and the inner ends of the second shoulder lateral grooves 80 in the tire axial direction terminate in the second shoulder land portion 14.

The second shoulder land portion 14 further has a plurality of shoulder sipes 82 formed therein. Each shoulder sipe 82 extends inward in the tire axial direction from a corresponding one of the inner ends in the second shoulder land portion 14 and connects to the second shoulder main groove 6.

Although the embodiments of the present invention have been described above in detail, the present invention is not limited to the specific embodiments described above, and it is needless to say that various modifications can be devised to implement the present invention as defined in claim 1. It is to be understood that, in the description herein, elements described in some mode and modifications of the elements are intended to be applied to (replace or be added to) corresponding elements in other modes even if no description thereof is provided.

### [Examples]

In order to confirm the effect of the present invention, a radial tire, for a passenger car, having a size of 245/40R18 and based on the tread pattern shown in FIG. 1 was produced as a sample tire according to the specifications indicated in Table 1, and various performances were evaluated. A tire of a comparative example had first crown lateral grooves and first sipe elements of crown sipes such that the first crown lateral grooves and the first sipe elements were tilted in opposite directions and intersected each other at an acute angle.

Evaluations were made for (1) wet braking performance for which a braking distance was evaluated in full braking on a wet road, (2) steering stability for which a professional driver made sensory evaluation for handling performance on a dry road surface, and (3) a state where uneven wear occurred in the crown land portion. The evaluations are each indicated as an index with the index of comparative example being 100. The greater the value of the index is, the better the evaluation is.

**[Table 1]**

| | Comparative example | Example 1 | Example 2 | Example 3 | Example 4 |
|---|---|---|---|---|---|
| Angle (degrees) of crown lateral groove relative to tire axial direction | 25 | 25 | 25 | 25 | 25 |
| Angle α (degrees) | 88 | 140 | 135 | 120 | 115 |
| Angle β (degrees) | 145 | 145 | 130 | 120 | 130 |
| Difference β-α (degrees) | 57 | 5 | -5 | 0 | 15 |
| Wet braking performance | 100 | 110 | 112 | 115 | 115 |
| Steering stability | 100 | 110 | 108 | 105 | 105 |
| Uneven wear | 100 | 110 | 110 | 110 | 105 |

According to the test results, it was confirmed that, in the tires of examples, as compared with comparative example, resistance to uneven wear in the crown land portion was greatly improved while wet braking performance and steering stability were almost the same as those of comparative example.

## Claims

1. A tire (1) comprising
a tread portion (2), wherein
the tread portion (2) has land portions defined by main grooves (3, 4, 5, 6),
the land portions include a crown land portion (10) disposed on a tire equator (C), the crown land portion (10) includes
a first crown edge (7) that extends in a tire circumferential direction on one side of the tire equator (C),
a second crown edge (8) that extends in the tire circumferential direction on the other side of the tire equator (C),
a plurality of crown lateral grooves (20) that extend from the first crown edge (7) beyond the tire equator (C) and terminate in the crown land portion (10), and
crown sipes (22) that include first sipe elements (23) extending from the crown lateral grooves (20) toward the second crown edge (8), and
the first sipe elements (23) intersect the crown lateral grooves (20) at an obtuse angle (α),
**characterized in that**
the crown sipes (22) further include second sipe elements (24) that extend so as to be bent relative to the first sipe elements (23)..

2. The tire (1) according to claim 1, wherein
the tread portion (2) has an asymmetric pattern for which a mounting direction to a vehicle is designated, and
in the mounting direction, when the tire (1) has been mounted to the vehicle, the first crown edge (7) is disposed on an outer side of the vehicle and the second crown edge (8) is disposed on an inner side of the vehicle.

3. The tire (1) according to claim 1 or 2, wherein the second sipe elements (24) intersect the first sipe elements (23) at an obtuse angle (β).

4. The tire (1) according to any one of claims 1-3, wherein an absolute value |α-β| of a difference between an angle α at which the crown lateral grooves (20) and the first sipe elements (23) intersect each other and an angle β at which the first sipe elements (23) and the second sipe elements (24) intersect each other is not greater than 30 degrees.

5. The tire (1) according to any one of claims 1-4, wherein the first sipe elements (23) and the crown lateral grooves (20) intersect each other at an angle (α) that is greater than 90 degrees and not greater than 145 degrees.

6. The tire (1) according to any one of claims 1-5, wherein a length (L1) of each crown lateral groove (20) is 51% to 70% of a width (W1), in a tire axial direction, of the crown land portion (10).

7. The tire (1) according to any one of claims 1-6, wherein
the land portions include a first middle land portion (11) that is adjacent to the first crown edge side (7) of the crown land portion (10) across a first crown main groove (3), and
the first middle land portion (11) includes first middle sipes (31) that extend from the first crown main groove (3) and terminate in the first middle land portion (11), and second middle sipes (32) each extending from the first crown main groove (3) and having a length, in a tire axial direction, which is less than each first middle sipe (31).

8. The tire (1) according to claim 7, wherein the first middle sipes (31) and the second middle sipes (32) are tilted relative to the tire axial direction in the same direction.

9. The tire (1) according to claim 7 or 8, wherein
the first middle land portion (11) is defined between the first crown main groove (3) and a first shoulder main groove (5) disposed outward of the first crown main groove (3) in the tire axial direction, and
the first middle land portion (11) has a plurality of first middle lateral grooves (40) that extend from the first shoulder main groove (5) and terminate in the first middle land portion (11).

10. The tire (1) according to claim 9, wherein each first middle lateral groove (40) has a groove width greater than each crown lateral groove (20) .

11. The tire (1) according to any one of claims 1-10, wherein
the land portions include a second middle land portion (12) that is adjacent to the second crown edge side (8) of the crown land portion (10) across a second crown main groove (4),
the second middle land portion (12) includes a plurality of third middle sipes (33) that transversely extend fully across the second middle land portion (12), and
the second middle land portion (12) includes a plurality of second middle lateral grooves (50) that extend outward from the second crown main groove (4) in a tire axial direction and terminate in the second middle land portion (12).

12. The tire (1) according to claim 11, wherein the third middle sipes (33) and the second middle lateral grooves (50) are tilted relative to the tire axial direction in the same direction.

13. The tire (1) according to claim 11 or 12, wherein each second middle lateral groove (50) has a groove width greater than each crown lateral groove (20).

14. The tire (1) according to any one of claims 1-13, wherein
each of the main grooves (3, 4, 5, 6) has a groove width of not less than 3.0 mm,
the total number of the main grooves (3, 4, 5, 6) disposed in the thread portion (2) is four, and
the number of the land portions that are defined in the tread portion is five.

## Patentansprüche

1. Reifen (1), umfassend
einen Laufflächenabschnitt (2), wobei
der Laufflächenabschnitt (2) durch Hauptrillen (3, 4, 5, 6) definierte Landabschnitte aufweist,
die Landabschnitte einen Kronenlandabschnitt (10) umfassen, der auf einem Reifenäquator (C) angeordnet ist,
wobei der Kronenlandabschnitt (10) umfasst
eine erste Kronenkante (7), die sich in einer Reifenumfangsrichtung auf einer Seite des Reifenäquators (C) erstreckt,
eine zweite Kronenkante (8), die sich in der Reifenumfangsrichtung auf der anderen Seite des Reifenäquators (C) erstreckt,
eine Vielzahl von Kronenquerrillen (20), die sich von der ersten Kronenkante (7) über den Reifenäquator (C) hinaus erstrecken und in dem Kronenlandabschnitt (10) enden, und
Kronenfeinschnitte (22), die erste Feinschnittelemente (23) umfassen, die sich von den Kronenquerrillen (20) in Richtung der zweiten Kronenkante (8) erstrecken, und
die ersten Feinschnittelemente (23) die Kronenquerrillen (20) unter einem stumpfen Winkel (α) schneiden,
**dadurch gekennzeichnet, dass**
die Kronenfeinschnitte (22) ferner zweite Feinschnittelemente (24) umfassen, die sich so erstrecken, dass sie relativ zu den ersten Feinschnittelementen (23) gebogen sind.

2. Reifen (1) nach Anspruch 1, wobei
der Laufflächenabschnitt (2) ein asymmetrisches Muster aufweist, für das eine Montagerichtung an einem Fahrzeug vorgesehen ist, und
in der Montagerichtung, wenn der Reifen (1) an dem Fahrzeug montiert wurde, die erste Kronenkante (7) auf einer Außenseite des Fahrzeugs angeordnet ist und die zweite Kronenkante (8) auf einer Innenseite des Fahrzeugs angeordnet ist.

3. Reifen (1) nach Anspruch 1 oder 2, wobei die zweiten Feinschnittelemente (24) die ersten Feinschnittelemente (23) unter einem stumpfen Winkel (β) schneiden.

4. Reifen (1) nach einem der Ansprüche 1-3, wobei ein Absolutwert |α-β| einer Differenz zwischen einem Winkel a, unter dem sich die Kronenquerrillen (20) und die ersten Feinschnittelemente (23) schneiden, und einem Winkel β, unter dem sich die ersten Feinschnittelemente (23) und die zweiten Feinschnittelemente (24) schneiden, nicht größer als 30 Grad ist.

5. Reifen (1) nach einem der Ansprüche 1-4, wobei sich die ersten Feinschnittelemente (23) und die Kronenquerrillen (20) unter einem Winkel (α) schneiden, der größer als 90 Grad und nicht größer als 145 Grad ist.

6. Reifen (1) nach einem der Ansprüche 1-5, wobei eine Länge (L1) jeder Kronenquerrille (20) 51 % bis 70 % einer Breite (W1) in einer axialen Richtung des Reifens des Kronenlandabschnitts (10) beträgt.

7. Reifen (1) nach einem der Ansprüche 1-6, wobei
die Landabschnitte einen ersten mittleren Landabschnitt (11) umfassen, der benachbart zu der Seite der erste Kronenkante (7) des Kronenlandabschnitts (10) über eine erste Kronenhauptrille (3) hinweg ist, und
der erste mittlere Landabschnitt (11) erste mittlere Feinschnitte (31) aufweist, die sich von der ersten Kronenhauptrille (3) erstrecken und in dem ersten mittleren Landabschnitt (11) enden, und zweite mittlere Feinschnitte (32), die sich jeweils von der ersten Kronenhauptrille (3) erstrecken und in einer axialen Richtung des Reifens eine kleinere Länge als jeder erste mittlere Feinschnitt (31) aufweisen.

8. Reifen (1) nach Anspruch 7, wobei die ersten mittleren Feinschnitte (31) und die zweiten mittleren Feinschnitte (32) relativ zur axialen Richtung des Reifens in dieselbe Richtung geneigt sind.

9. Reifen (1) nach Anspruch 7 oder 8, wobei
der erste mittlere Landabschnitt (11) zwischen der ersten Kronenhauptrille (3) und einer ersten Schulterhauptrille (5), die in der axialen Richtung des Reifens außen von der ersten Kronenhauptrille (3) angeordnet ist, definiert ist, und
der erste mittlere Landabschnitt (11) eine Vielzahl von ersten mittleren Querrillen (40) aufweist, die sich von der ersten Schulterhauptrille (5) erstrecken und in dem ersten mittleren Landabschnitt (11) enden.

10. Reifen (1) nach Anspruch 9, wobei jede erste mittlere Querrille (40) eine größere Rillenbreite als jede Kronenquerrille (20) aufweist.

11. Reifen (1) nach einem der Ansprüche 1-10, wobei
die Landabschnitte einen zweiten mittleren Landabschnitt (12) umfassen, der benachbart zu der Seite der zweiten Kronenkante (8) des Kronenlandabschnitts (10) über eine zweite Kronenhauptrille hinweg (4) ist,
der zweite mittlere Landabschnitt (12) eine Vielzahl von dritten mittleren Feinschnitten (33) aufweist, die sich in der Querrichtung vollständig über den zweiten mittleren Landabschnitt (12) hinweg erstrecken, und
der zweite mittlere Landabschnitt (12) eine Vielzahl von zweiten mittleren Querrillen (50) aufweist, die sich von der zweiten Kronenhauptrille (4) in einer axialen Richtung des Reifens nach außen erstrecken und in dem zweiten mittleren Landabschnitt (12) enden.

12. Reifen (1) nach Anspruch 11, wobei die dritten mittleren Feinschnitte (33) und die zweiten mittleren Querrillen (50) relativ zur axialen Richtung des Reifens in dieselbe Richtung geneigt sind.

13. Reifen (1) nach Anspruch 11 oder 12, wobei jede zweite mittlere Querrille (50) eine größere Rillenbreite als jede Kronenquerrille (20) aufweist.

14. Reifen (1) nach einem der Ansprüche 1-13, wobei
jede der Hauptrillen (3, 4, 5, 6) eine Rillenbreite von nicht weniger als 3,0 mm aufweist,
die Gesamtzahl der im Laufflächenabschnitt (2) angeordneten Hauptrillen (3, 4, 5, 6) vier beträgt, und
die Anzahl der im Laufflächenabschnitt definierten Landabschnitte fünf beträgt.

## Revendications

1. Pneumatique (1) comprenant
une portion formant bande de roulement (2), dans lequel la portion formant bande de roulement (2) a des portions en relief définies par des rainures principales (3, 4, 5, 6),
les portions en relief incluent une portion en relief de couronne (10) disposée sur un équateur de pneumatique (C),
la portion en relief de couronne (10) inclut
un premier bord de couronne (7) qui s'étend dans une direction circonférentielle du pneumatique sur un côté de l'équateur de pneumatique (C),
un second bord de couronne (8) qui s'étend dans la direction circonférentielle du pneumatique sur l'autre côté de l'équateur de pneumatique (C),
une pluralité de rainures latérales de couronne (20) qui s'étendent depuis le premier bord de couronne (7) au-delà de l'équateur de pneumatique (C) et se terminent dans la portion en relief de couronne (10), et
des fentes de couronne (22) qui incluent des premiers éléments de fente (23) s'étendant depuis les rainures latérales de couronne (20) vers le second bord de couronne (8), et
les premiers éléments de fente (23) se recoupent avec les rainures latérales de couronne (20) sous un angle obtus (α),
**caractérisé en ce que**
les fentes de couronne (22) incluent en outre des seconds éléments de fente (24) qui s'étendent de manière à être cintrés relativement aux premiers éléments de fente (23).

2. Pneumatique (1) selon la revendication 1, dans lequel
la portion formant bande de roulement (2) a un motif asymétrique qui a une direction de montage sur un véhicule par conception, et
dans la direction de montage, quand le pneumatique (1) a été monté sur le véhicule, le premier bord de couronne (7) est disposé sur un côté extérieur du véhicule et le second bord de couronne (8) est disposé sur un côté intérieur du véhicule.

3. Pneumatique (1) selon la revendication 1 ou 2, dans lequel les seconds éléments de fente (24) se recoupent avec les premiers éléments de fente (23) sous un angle obtus (β).

4. Pneumatique (1) selon l'une quelconque des revendications 1 à 3, dans lequel une valeur absolue |α - β | d'une différence entre un angle α sous lequel les rainures latérales de couronne (20) et les premiers éléments de fente (23) se recoupent les unes avec les autres et un angle β sous lequel les premiers éléments de fente (23) et les seconds éléments de fente (24) se recoupent les uns avec les autres n'est pas supérieure à 30 degrés.

5. Pneumatique (1) selon l'une quelconque des revendications 1 à 4, dans lequel les premiers éléments de fente (23) et les rainures latérales de couronne (20) se recoupent les uns avec les autres sous un angle (a) qui est supérieur à 90 degrés et qui n'est pas supérieur à 145 degrés.

6. Pneumatique (1) selon l'une quelconque des revendications 1 à 5, dans lequel une longueur (L1) de chaque rainure latérale de couronne (20) est 51 % à 60 % d'une largeur (W1), dans une direction axiale du pneumatique, de la portion en relief de couronne (10).

7. Pneumatique (1) selon l'une quelconque des revendications 1 à 6, dans lequel
les portions en relief incluent une première portion en relief médiane (11) qui est adjacente au premier côté du bord de couronne (7) de la portion en relief de couronne (10) à travers une première rainure principale de couronne (3), et
la première portion en relief médiane (11) inclut des premières fentes médianes (31) qui s'étendent depuis la première rainure principale de couronne (3) et se terminent dans la première portion en relief médiane (11), et des deuxièmes fentes médianes (32) s'étendant chacune depuis la première rainure principale de couronne (3) et ayant une longueur, dans une direction axiale du pneumatique, qui est inférieure à chaque première fente médiane (31).

8. Pneumatique (1) selon la revendication 7, dans lequel les premières fentes médianes (31) et les deuxièmes fentes médianes (32) sont inclinées relativement à la direction axiale du pneumatique dans la même direction.

9. Pneumatique (1) selon la revendication 7 ou 8, dans lequel
la première portion en relief médiane (11) est définie entre la première rainure principale de couronne (3) et une première rainure principale d'épaulement (5) disposée à l'extérieur de la première rainure principale de couronne (3) dans la direction axiale du pneumatique, et
la première portion en relief médiane (11) a une pluralité de premières rainures latérales médianes (40) qui s'étendent depuis la première rainure principale d'épaulement (5) et se terminent dans la première portion en relief médiane (11).

10. Pneumatique (1) selon la revendication 9, dans lequel chaque première rainure latérale médiane (40) a une largeur de rainure supérieure à chaque rainure latérale de couronne (20).

11. Pneumatique (1) selon l'une quelconque des revendications 1 à 10, dans lequel
les portions en relief incluent une seconde portion en relief médiane (12) qui est adjacente au second côté du bord de couronne (8) de la portion en relief de couronne (10) à travers une seconde rainure principale de couronne (4),
la seconde portion en relief médiane (12) inclut une pluralité de troisièmes fentes médianes (33) qui s'étendent transversalement entièrement à travers la seconde portion en relief médiane (12), et
la seconde portion en relief médiane (12) inclut une pluralité de secondes rainures latérales médianes (50) qui s'étendent vers l'extérieur depuis la seconde rainure principale de couronne (4) dans une direction axiale du pneumatique et se terminent dans la seconde portion en relief médiane (12).

12. Pneumatique (1) selon la revendication 11, dans lequel les troisièmes fentes médianes (33) et les secondes rainures latérales médianes (50) sont inclinées relativement à la direction axiale du pneumatique dans la même direction.

13. Pneumatique (1) selon la revendication 11 ou 12, dans lequel chaque seconde rainure latérale médiane (50) a une largeur de rainure supérieure à chaque rainure latérale de couronne (20).

14. Pneumatique (1) selon l'une quelconque des revendications 1 à 13, dans lequel
chacune des rainures principales (3, 4, 5, 6) a une largeur de rainure qui n'est pas inférieure à 3,0 mm,
le nombre total de rainures principales (3, 4, 5, 6) disposées dans la portion formant bande de roulement (2) est de quatre, et
le nombre de portions en relief qui sont définies dans la portion formant bande de roulement est de cinq.
